# EUROPÄISCHE PATENTSCHRIFT

(11) **EP 3 680 644 B1**
(45) Veröffentlichungstag und Bekanntmachung des Hinweises auf die Patenterteilung: **19.05.2021**
(21) Anmeldenummer: 19205528.3
(22) Anmeldetag: 28.10.2019
(51) Int. Cl.: G01N 21/15, G01N 21/85

(54) **ANALYSEVORRICHTUNG**
ANALYZING APPARATUS
DISPOSITIF D'ANALYSE

(30) Priorität: 08.01.2019 DE 102019100270
(43) Veröffentlichungstag der Anmeldung: 15.07.2020
(73) Patentinhaber: SICK AG, 79183 Waldkirch (DE)
(72) Erfinder: SCHIFFLER, Ingo, 79100 Freiburg (DE)
(74) Vertreter: Manitz Finsterwald Patent- und Rechtsanwaltspartnerschaft mbB

(56) Entgegenhaltungen:
- EP-A1- 0 631 128
- EP-A1- 1 693 665
- EP-A2- 0 337 108
- US-A1- 2010 073 679

## Beschreibung

Die vorliegende Erfindung betrifft eine Analysevorrichtung zum Analysieren eines Messfluids, das durch einen Strömungskanal strömt, mit einer optischen Messeinheit, die wenigstens eine optische Grenzfläche zur messtechnischen Anbindung der optischen Messeinheit an den Strömungskanal aufweist, und mit einer Spülvorrichtung zum Spülen der wenigstens einen optischen Grenzfläche mit einem Spülfluid.

Derartige Vorrichtungen dienen beispielsweise zur Bestimmung der Konzentration von Gasen oder Feststoffpartikeln in industriellen Abgasschornsteinen, zur Fackelgasüberwachung, zur Dampfrückgewinnungs-Überwachung oder zur Überwachung von Verbrennungsprozessen und chemischen Prozessen. Bei dem Messfluid und dem Spülfluid kann es sich um Gase oder Flüssigkeiten handeln. Die optische Messeinheit umfasst üblicherweise einen Sender zum Aussenden von elektromagnetischen Strahlen in den Strömungskanal sowie einen Empfänger zum Empfangen von transmittierter, reflektierter oder gestreuter elektromagnetischer Strahlung. Optische Messeinheiten, die auf der Detektion von transmittiertem Licht beruhen, sind häufig zweiteilig ausgeführt und an gegenüberliegenden Wandabschnitten des Strömungskanals angebracht. Es sind auch optische Messeinheiten bekannt, die eine Kombination aus Sender und Empfänger sowie einen gegenüberliegenden Reflektor aufweisen. Bei der optischen Grenzfläche kann es sich um die dem Messfluidstrom zugewandte Vorderseite eines Sichtfensters handeln, das die optische Messeinheit vom Messfluid trennt. Gattungsgemäße Analysevorrichtungen sind beispielsweise in der EP 2 428 793 A1 und in der DE 20 2015 102 319 U1 offenbart.

Das Spülen der optischen Grenzfläche mit einem Spülfluid dient der Reinhaltung des Sichtfensters der optischen Messeinheit und verhindert insbesondere, dass die optische Grenzfläche während des Betriebs der Analysevorrichtung verschmutzt, beschlägt oder korrodiert. Derartige Verschmutzungen stellen in der Praxis ein beträchtliches Problem dar, weil sie das auswertbare Signal verschlechtern, die Messgenauigkeit beeinträchtigen oder sogar zu Verfälschungen der Messung führen können. Als Spülfluide können insbesondere Umgebungsluft, Druckluft, Wasserdampf, Stickstoff oder Spülflüssigkeiten eingesetzt werden. Die Spülvorrichtung ist in gängiger Weise an eine geeignete Spülfluidquelle angeschlossen und weist eine Spülfluidzuführungseinheit auf, die das Spülfluid der optischen Grenzfläche zuführt.

Problematisch ist bei Analysevorrichtungen mit Spülvorrichtungen, dass vor Ort eine Spülfluidquelle zur Verfügung gestellt werden muss, was aufwendig ist. Insbesondere ist die Bereitstellung von Pumpen, Gebläsen, Lagerbehältern, Gasflaschen, Filtern, Abscheidern, Rohrleitungen, Ventilen und dergleichen mit beträchtlichen Zusatzkosten verbunden. Ferner ist es oft schwierig, ein ausreichend sauberes Spülfluid bereitzustellen, das nicht selbst zu Verschmutzungen führt. Bei hoher Umgebungsfeuchte kann Umgebungsluft, die z.B. als Spülgas verwendet wird, unerwünschte Feuchtigkeit eintragen, die zu Kondensation führen kann und somit auch eine Korrosion der betroffenen Bauteile begünstigen kann. Weiterhin gibt es bestimmte Prozesse, bei welchen ein Eintrag von Spülfluiden nicht gewünscht oder nicht zulässig ist. Beispielsweise darf bei bestimmten chemischen Prozessen oder bei einer Inertisierung kein Sauerstoff zugeführt werden, weshalb in diesem Fall auf sauerstofffreie oder sauerstoffarme Fluide wie Stickstoff, Dampf oder Verbrennungsabgase zurückgegriffen werden muss, deren Bereitstellung kostspielig ist. Das Spülfluid darf ferner nicht in die Messstrecke geraten, weil es sonst die Analyse beeinträchtigen könnte. Es ist eine Herausforderung, unter allen Betriebsbedingungen einerseits eine ausreichende Spülung vorzusehen und andererseits ein Eindringen von Spülfluid in die Messstrecke auszuschließen. Grundsätzlich besteht die Möglichkeit, zur Einsparung von Kosten auf eine Spülvorrichtung zu verzichten und stattdessen auf andere Maßnahmen zur Verschmutzungsvermeidung zurückzugreifen. Beispielsweise kann das Messfenster zurückversetzt angeordnet werden, damit es nicht direkt dem Messfluidstrom ausgesetzt ist. Dabei entstehen jedoch Toträume, die den Fluidaustausch verzögern und zu einer Verlängerung der Ansprechzeiten führen. Außerdem können auf diese Weise Verschmutzungen, Korrosionen und Beschläge nicht vollständig verhindert werden. Einer Verschmutzung der optischen Grenzfläche kann auch durch Optimierungen der Strömungsführung entgegengewirkt werden, was jedoch im Allgemeinen keinen ausreichenden Schutz unter allen Anwendungsbedingungen gewährleistet. Die optische Grenzfläche kann auch eine Beschichtung aufweisen, die einer Korrosion, einem Beschlagen oder einem Anhaften von Partikeln entgegenwirkt. Allerdings ist die Wirksamkeit solcher Beschichtungen im Allgemeinen begrenzt. Auch eine Heizung des Messfensters kann in Erwägung gezogen werden, um Beschläge und Korrosion zu vermeiden. Insbesondere bei flüssigen oder festen Partikeln reicht diese Maßnahme aber nicht für eine zuverlässige Verschmutzungsvermeidung aus. Es können auch Filter eingesetzt werden, die den Messbereich umgeben und dadurch verhindern, dass Schmutz bis zur optischen Grenzfläche gelangt. Derartige Filter führen jedoch zu einer Erhöhung der Ansprechzeit, die bei einer fortschreitenden Verschmutzung des Filters sogar noch zunimmt. Je nach Anwendung kann der Filter sogar vollständig verstopfen, so dass eine Wartung erforderlich ist.

Die US 2010/0073679 A1 offenbart eine an einem Strömungskanal angeordnete Analysevorrichtung, die einen optischen Messkopf, einen Filter und eine Pumpe aufweist. Dem Strömungskanal wird Spülgas entnommen, das nach einer Aufbereitung durch den Filter mittels der Pumpe in eine Kammer des optischen Messkopfs eingeblasen wird. Von dieser gelangt das Spülgas über eine Leitung wieder in den Strömungskanal zurück.

In der EP 0 631 128 A1 ist eine Messvorrichtung zur Untersuchung von Dieselabgas offenbart, bei welcher eine Messkammer mit optischer Strahlung durchstrahlt wird. Es ist eine Umgehungsleitung vorgesehen, die endseitig in die Messkammer mündet.

Die EP 0 337 108 A2 offenbart eine Vorrichtung zur Trübungsmessung von Abgasen, die zwei Messfenster sowie eine Einrichtung zum ferngesteuerten Reinigen der Messfenster umfasst. Für die Reinigung wird ein Lösungsmittel auf die Fenster gesprüht. Anschließend werden Wischer über die Fenster bewegt.

In der EP 1 693 665 A1 ist eine Vorrichtung zum Erfassen der Menge eines Spurengases in einer Gasströmung offenbart, die einen im Strömungskanal angeordneten Messdetektor und einen in einem separaten Gehäuse angeordneten Kompensationsdetektor aufweist.

Es ist eine Aufgabe der Erfindung, eine Analysevorrichtung der eingangs genannten Art anzugeben, die kostengünstig bereitstellbar und einfach verwendbar ist und gleichzeitig eine Verschmutzung der optischen Grenzfläche zuverlässig verhindert.

Die Lösung der Aufgabe erfolgt durch eine Analysevorrichtung mit den Merkmalen des Anspruchs 1.

Erfindungsgemäß ist die Spülvorrichtung dazu ausgebildet, Messfluid aufzubereiten und das aufbereitete Messfluid als Spülfluid zu verwenden und in einen an die optische Grenzfläche angrenzenden Spülbereich einzubringen. Das heißt, das Messfluid selbst wird nach einer geeigneten Aufbereitung zum Spülen der optischen Grenzfläche verwendet. Die Bereitstellung einer externen Spülfluidquelle ist somit nicht erforderlich. Außerdem ist es unproblematisch, wenn Spülfluid in die Messstrecke gerät, da es naturgemäß die gleiche chemische Zusammensetzung hat wie das Messfluid. Die Messung ist somit nicht nur wesentlich einfacher durchführbar, als dies bislang möglich war, sondern es besteht auch ein erhöhtes Maß an Zuverlässigkeit. Sollte sich die pro Zeiteinheit abzugebende Spülfluidmenge während des Betriebs der Analysevorrichtung ändern, so hat dies nur einen relativ geringen Einfluss auf die Messung.

Erfindungsgemäß ist die Spülvorrichtung dazu ausgebildet, einen Teilstrom des durch den Strömungskanal strömenden Messfluids aufzufangen, aufzubereiten und unter Ausnutzung der Strömungsenergie in den Spülbereich einzubringen. Das Auffangen erfolgt mit einer Öffnung, die zumindest im Wesentlichen entgegen einer Hauptströmungsrichtung des Strömungskanals ausgerichtet ist. Bei Bedarf kann an der Öffnung ein Trichter angeordnet sein. Aufgrund der Ausnutzung der Strömungsenergie kann eine Pumpe oder ein Gebläse der Spülvorrichtung für eine verringerte Leistung ausgelegt sein, wodurch Kosten gespart werden. Bei bestimmten Anwendungen kann es sogar sein, dass überhaupt keine Pumpe und kein Gebläse zum Einbringen des Spülfluids in den Spülbereich erforderlich ist.

Weiterbildungen der Erfindung sind den abhängigen Ansprüchen, der Beschreibung sowie der beigefügten Zeichnung zu entnehmen.

Vorzugsweise definiert die optische Messeinheit einen Messbereich, der zumindest im Wesentlichen frei durchströmbar ist. Der Messbereich, der wenigstens einen Teil der Messstrecke bildet, ist also nicht durch Filter oder dergleichen abgeschirmt, so dass sich eine besonders kurze Ansprechzeit ergibt. Vorzugsweise ist der Messbereich bezüglich des Querschnitts des Strömungskanals zentral angeordnet.

Der Spülbereich kann durch Abschirmungs- und/oder Filtermittel von dem Messbereich getrennt sein. Beispielsweise kann die optische Grenzfläche durch einen Rohrstutzen vom Messfluidstrom abgeschirmt sein oder bezüglich der Wandung des Strömungskanals zurückgesetzt angeordnet sein, um die Einwirkdauer des Spülfluids zu verlängern. Der abgeschirmte oder zurückgesetzte Bereich kann in diesem Fall den Spülbereich bilden.

Gemäß einer Ausführungsform der Erfindung ist die Spülvorrichtung dazu ausgebildet, das Messfluid zum Aufbereiten zu filtern. Die Filterung kann mittels eines Metall-, Kunststoff- oder Keramiksinterfilters, einer Membran, eines Gewebes und/oder einer Lochblende erfolgen. Im Messfluidstrom enthaltene Schmutzpartikel können so von der optischen Grenzfläche ferngehalten werden.

Alternativ oder zusätzlich kann die Spülvorrichtung dazu ausgebildet sein, das Messfluid zum Aufbereiten einem Abscheideprozess zu unterziehen. Dadurch kann das Spülfluid zumindest im Wesentlichen frei von Flüssigkeitstropfen und/oder Feststoffpartikeln gehalten werden. Für eine solche Partikelabscheidung kann die Spülvorrichtung insbesondere mit einem Filter, einer Membran, einer Düse, insbesondere einer Venturi-Düse, einem Prallblech und/oder einem Zyklon versehen sein.

Die Spülvorrichtung kann dazu ausgebildet sein, das Messfluid zum Aufbereiten zu heizen oder zu kühlen. Beispielsweise kann mit erwärmtem Messfluid eine übermäßige Kondensation vermieden werden.

Gemäß einer weiteren Ausführungsform der Erfindung ist die Spülvorrichtung dazu ausgebildet, Messfluid aus dem Strömungskanal zu entnehmen, das entnommene Messfluid innerhalb oder außerhalb des Strömungskanals aufzubereiten und das aufbereitete Messfluid mittels wenigstens einer Zuführleitung dem Spülbereich zuzuführen. Dies ermöglicht eine besonders effektive Spülung. Die Entnahme ist je nach Anwendung an einer oder an mehreren Entnahmestellen möglich. Die betreffende Entnahmeöffnung kann derart angeordnet sein, dass eine seitliche Entnahme erfolgt, das heißt dass die Entnahmerichtung quer zu einer Hauptströmungsrichtung des Strömungskanals verläuft. Alternativ können die Entnahmestelle und die zugehörige Entnahmeöffnung auch derart angeordnet sein, dass die Entnahmerichtung parallel zur Hauptströmungsrichtung verläuft.

Gemäß einer speziellen Ausführungsform der Erfindung ist die Spülvorrichtung dazu ausgebildet, das Messfluid an einer verunreinigungsgeschützten Stelle zu entnehmen und dadurch aufzubereiten. Beispielsweise kann die Entnahme an einer strömungsabgewandten Seite des Strömungskanals, an einer vor direkter Anströmung geschützten Stelle oder an einer partikelarmen Stelle erfolgen. Bei bestimmten Anwendungen kann eine derartige Aufbereitung ausreichend sein. Bei Bedarf kann aber zusätzlich eine Filterung, Heizung, Kühlung oder Abscheidung vorgesehen sein.

Gemäß einer weiteren Ausführungsform der Erfindung umfasst die optische Messeinheit zwei optische Grenzflächen, wobei die Spülvorrichtung dazu ausgebildet ist, das aufbereite Messfluid als Spülfluid in jeweilige an die optischen Grenzflächen angrenzende Spülbereiche abzugeben. Somit können die Messfenster eines Senders und eines Empfängers oder eines Reflektors gleichermaßen geschützt werden.

Es kann vorgesehen sein, dass die zwei optischen Grenzflächen einander gegenüberliegend angeordnet sind und zwischen den optischen Grenzflächen ein Messbereich der optischen Messeinheit ausgebildet ist. Vorzugsweise ist der Messbereich wie vorstehend beschrieben zumindest im Wesentlichen frei durchströmbar. Am Anfang und am Ende des Messbereichs können sich die Spülbereiche befinden, die nicht zwingend frei durchströmbar sein müssen. Da sich das Spülfluid chemisch nicht wesentlich vom Messfluid unterscheidet, ist die effektive Messstrecke maximal.

Die Spülvorrichtung kann dazu ausgebildet sein, das aufbereitete Messfluid aktiv in den Spülbereich einzubringen, insbesondere einzublasen oder einzuspritzen. Alternativ oder zusätzlich kann die Spülvorrichtung dazu ausgebildet sein, Messfluid aktiv aus dem Strömungskanal, insbesondere aus einem zumindest im Wesentlichen frei durchströmbaren Messbereich, abzusaugen. Um eine aktive Einbringung und/oder Absaugung zu ermöglichen, kann die Spülvorrichtung eine Pumpe oder ein Gebläse umfassen. Grundsätzlich können die Einbringung und/oder die Absaugung auch unter zusätzlicher Nutzung der Strömungsenergie erfolgen.

Die Erfindung betrifft auch ein Verfahren gemäß Anspruch 13 zum Analysieren eines Messfluids, das durch einen Strömungskanal strömt, mittels einer optischen Messeinheit, die wenigstens eine optische Grenzfläche zur messtechnischen Anbindung der optischen Messeinheit an den Strömungskanal aufweist, wobei die wenigstens eine optische Grenzfläche mittels einer Spülvorrichtung mit einem Spülfluid gespült wird.

Erfindungsgemäß wird Messfluid aufbereitet und das aufbereitete Messfluid als Spülfluid in einen an die optische Grenzfläche angrenzenden Spülbereich eingebracht. Dies ermöglicht nicht nur einen Verzicht auf die Bereitstellung einer externen Spülfluidquelle, sondern erhöht auch die Zuverlässigkeit der Messung, weil die Messung weniger durch einen sich gegebenenfalls ändernden Anteil messgasfremden Spülfluids beeinflusst werden kann.

Erfindungsgemäß wird ein erster Teilstrom des durch den Strömungskanal strömenden Messfluids aufgefangen, aufbereitet und in den Spülbereich eingebracht und ein von dem Spülbereich getrennter Messbereich der optischen Messeinheit wird einem separaten zweiten Teilstrom des durch den Strömungskanal strömenden Messfluids ausgesetzt. Dadurch wird einerseits einer Verschmutzung der optischen Grenzfläche zuverlässig entgegengewirkt, während andererseits die Ansprechzeit aufgrund des unbehinderten zweiten Teilstroms geringgehalten wird.

Erfindungsgemäß wird der erste Teilstrom mit einer Öffnung aufgefangen, die zumindest im Wesentlichen entgegen einer Hauptströmungsrichtung des Strömungskanals ausgerichtet ist.

Ein erfindungsgemäßes Verfahren kann insbesondere mit einer erfindungsgemäßen Analysevorrichtung, die wie vorstehend beschrieben gestaltet ist, durchgeführt werden. Insbesondere können in einem erfindungsgemäßen Verfahren alle vorstehend unter Bezugnahme auf die Analysevorrichtung offenbarten Schritte ausgeführt werden.

Die Erfindung wird nachfolgend beispielhaft unter Bezugnahme auf die Zeichnung beschrieben.
- Fig. 1: zeigt in vereinfachter Form eine gemäß dem Stand der Technik gestaltete Analysevorrichtung, welche einen den Messbereich umgebenden Filter aufweist.
- Fig. 2: zeigt eine andere gemäß dem Stand der Technik gestaltete Analysevorrichtung, welche eine Spülvorrichtung mit externer Spülfluidquelle umfasst.
- Fig. 3: zeigt eine Analysevorrichtung gemäß einer ersten Ausführungsform der Erfindung.
- Fig. 4: zeigt eine Analysevorrichtung gemäß einer zweiten Ausführungsform der Erfindung.
- Fig. 5: zeigt eine Analysevorrichtung gemäß einer dritten Ausführungsform der Erfindung.

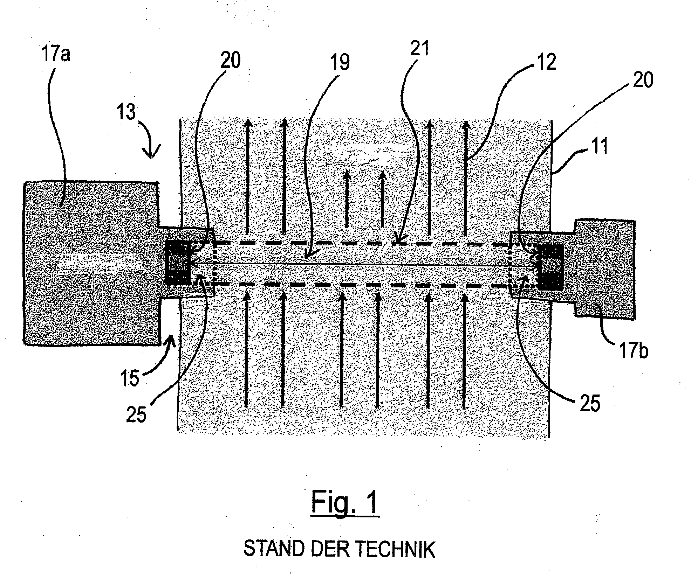

Fig. 1 zeigt in vereinfachter Form einen Teil eines Strömungskanals 11, bei dem es sich beispielsweise um einen Abgaskamin oder um ein Fackelrohr handeln kann. In dem Strömungskanal 11 bewegt sich ein Gasstrom 12 entlang einer Hauptströmungsrichtung. Zur Überwachung der Zusammensetzung des Gasstroms 12, beispielsweise des Sauerstoffgehalts des Gasstroms 12, ist eine an dem Strömungskanal 11 angebrachte, gemäß dem Stand der Technik gestaltete Analysevorrichtung 13 vorgesehen, welche in grundsätzlich bekannter Weise eine zweiteilige optische Messeinheit 15 umfasst. Speziell umfasst die optische Messeinheit 15 ein Sendemodul 17a mit einem nicht gezeigten Strahlungssender sowie ein Empfangsmodul 17b mit einem nicht gezeigten Strahlungsempfänger. Die messtechnische Anbindung des Sendemoduls 17a und des Empfangsmoduls 17b an den Strömungskanal 11 erfolgt mittels Sichtfenstern oder Prozessfenstern, deren Vorderseiten jeweilige optische Grenzflächen 20 bilden.

Um die optischen Grenzflächen 20 des Sendemoduls 17a und des Empfangsmoduls 17b vor einer Verschmutzung zu schützen, ist die Messstrecke 19 von einem Filter 21 umgeben. Als weitere Maßnahme gegen Verschmutzung sind vor den optischen Grenzflächen 20 Toträume 25 vorgesehen. Aufgrund der vollständigen Abschirmung der Messstrecke 19 durch den Filter 21 ist die Ansprechzeit der in Fig. 1 gezeigten Analysevorrichtung 13 relativ lang. Zudem besteht die Gefahr, dass sich der Filter 21 mit der Zeit zusetzt, wodurch eine verlässliche Messung nicht mehr möglich ist.

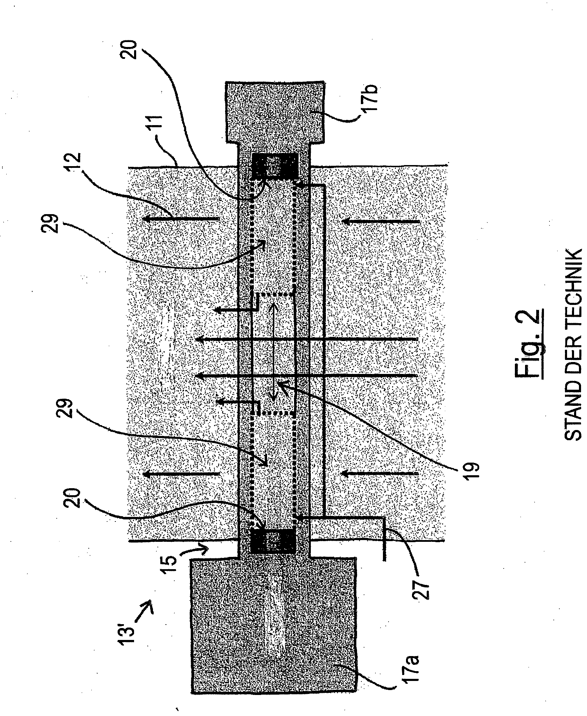

Die in Fig. 2 gezeigte, ebenfalls gemäß dem Stand der Technik gestaltete Analysevorrichtung 13' ist ähnlich gestaltet wie die zuvor beschriebene Analysevorrichtung 13, weist jedoch keinen die Messstrecke 19 vollständig umgebenden Filter auf. Zur Verhinderung von Verschmutzungen der optischen Grenzflächen 20 ist hier eine Spülvorrichtung 27 vorgesehen, welche mit einer nicht dargestellten Spülmittelquelle, beispielsweise in Form eines Druckbehälters, verbindbar ist und dazu ausgebildet ist, Spülfluid wie zum Beispiel Stickstoff in die Umgebung der optischen Grenzflächen 20 zu blasen. Die Messstrecke 19 ist hier verkürzt, weil sich beidseits der Messstrecke 19 Spülbereiche 29 anschließen, in welchen kein Messfluid, sondern lediglich das unterschiedlich zusammengesetzte Spülfluid vorhanden ist.

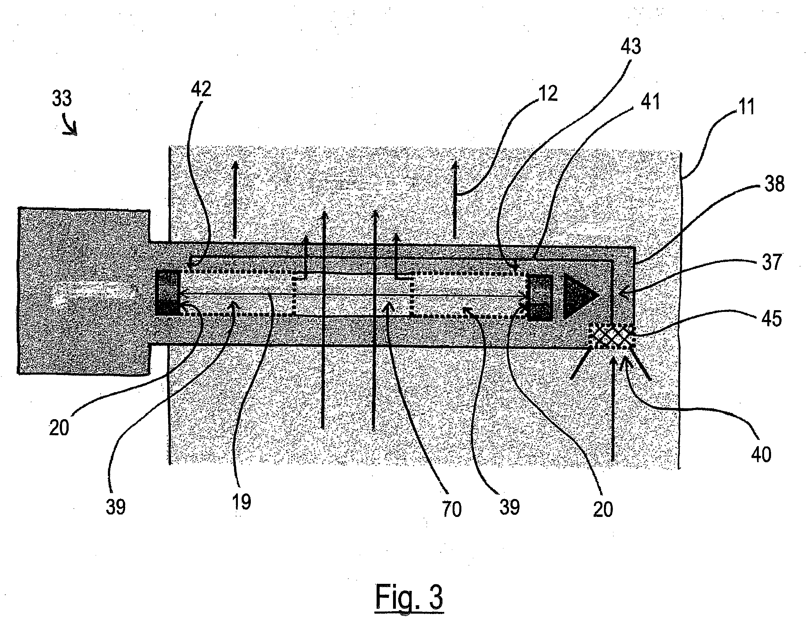

Fig. 3 zeigt eine erfindungsgemäße Analysevorrichtung 33, die wie die in Fig. 2 dargestellte Analysevorrichtung 13' eine Messstrecke 19 aufweist, die sich zwischen jeweiligen optischen Grenzflächen 20 befindet. Die Analysevorrichtung 33 ist als Reflexionsanordnung ausgebildet, könnte jedoch auch als Transmissionsanordnung ausgebildet sein. Die Spülvorrichtung 37 ist hier nicht an eine externe Spülfluidquelle angeschlossen, sondern dazu ausgebildet, Messfluid aufzubereiten und das aufbereitete Messfluid als Spülfluid in jeweilige an die optischen Grenzflächen 20 angrenzende Spülbereiche 39 einzubringen. Zu diesem Zweck ist an einem Gehäuse 38 der optischen Messeinheit 15 ein Fluideinlass 40 (hier als Trichter dargestellt) zum Auffangen von Messfluid ausgebildet, der mit einer weiterführenden Zuführleitung 41 in Verbindung steht. Die Zuführleitung 41 weist einen ersten Auslass 42 und einen zweiten Auslass 43 auf, die jeweils in einen Spülbereich 39 münden. Die Spülbereiche 39 grenzen direkt an die optischen Grenzflächen 20 an. Bei Bedarf können der erste Auslass 42 und der zweite Auslass 43 mit Düsen versehen sein.

Um das Messfluid vor dem Einbringen in die Spülbereiche 39 aufzubereiten, ist im Bereich des Einlasses 40 ein Aufbereitungsfilter 45 vorgesehen. Hierbei kann es sich um einen Metallfilter, einen Kunststofffilter, einen Keramiksinterfilter oder eine Membran handeln. Auch ein Gewebe oder eine Lochblende könnten als Filter vorgesehen sein. Je nach Verschmutzungsgrad des Messfluids kann auch eine Kombination von unterschiedlichen Filtern vorgesehen sein. Der Transport des aufbereiteten Messfluids über die Zuführleitung 41 bis zu den Auslässen 42, 43 kann aktiv, d.h. mittels einer Pumpe oder eines Gebläses, erfolgen und/oder unter Ausnutzung der Strömungsenergie. Da das Spülfluid gereinigtes Messfluid ist, bildet der gesamte Raum zwischen den beiden optischen Grenzflächen 20 die Messstrecke 19. Eine Veränderung der pro Zeit abgegebenen Menge an Spülfluid hat keine nennenswerten Auswirkungen auf die Messung, sondern allenfalls auf das Ansprechverhalten oder den Verschmutzungsgrad. Die Messstrecke 19 ist nicht von einem Filter umgeben, so dass der Raum zwischen den beiden optischen Grenzflächen 20 zumindest im Wesentlichen frei von dem Messfluid durchströmbar ist. Dadurch weist die erfindungsgemäße Analysevorrichtung 33 ein besonders schnelles Ansprechverhalten auf.

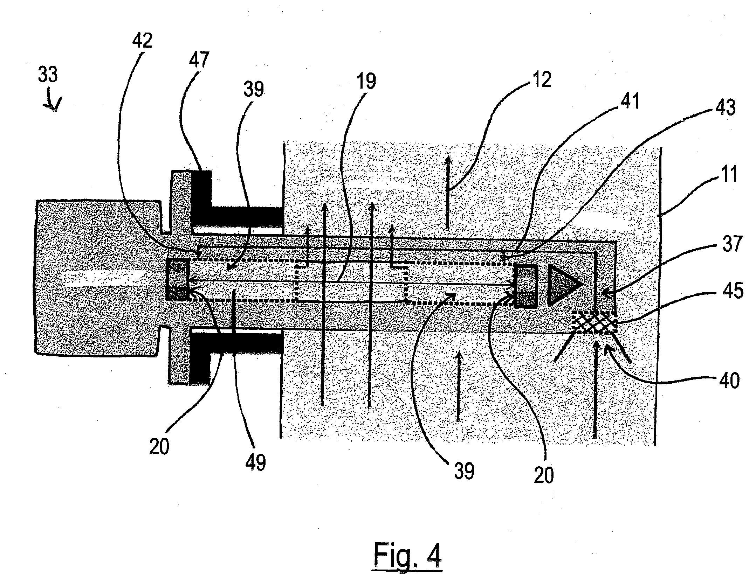

In Fig. 4 ist eine erfindungsgemäße Analysevorrichtung 33 gezeigt, die ebenso gestaltet ist wie die in Fig. 3 dargestellte Vorrichtung, aber im Unterschied zu dieser an einem Flansch 47 montiert ist, der gegenüber einer Wand des Strömungskanals 11 zurückgesetzt ist. Aufgrund dieser Montage ist ein Totraum 49 gebildet, in den das Messfluid nur schlecht eindringen kann. Aufgrund der Spülung des Totraums 49 mit Messfluid mittels der Spülvorrichtung 37 ist jedoch sichergestellt, dass die gesamte Messstrecke 19 mit Messfluid gefüllt ist.

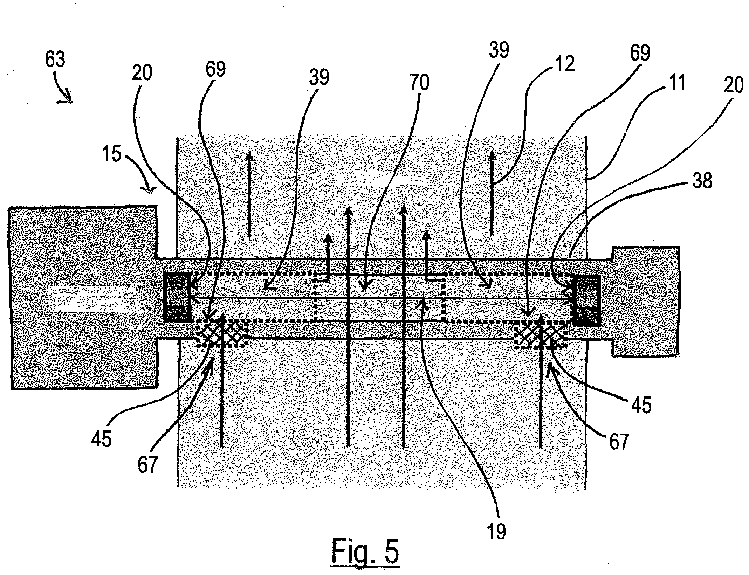

Eine weitere Ausführungsform einer erfindungsgemäßen Analysevorrichtung 63 ist in Fig. 5 gezeigt. Wie dargestellt ist die optische Messeinheit 15 hier ähnlich wie in Fig. 2 einteilig, das heißt als so genannte "Lanze", ausgestaltet. Die Spülvorrichtung 67 ist bei dieser Ausgestaltung ohne Zuführleitungssystem ausgebildet. Stattdessen sind im Gehäuse 38 der optischen Messeinheit 15 Öffnungen 69 vorgesehen, in welchen jeweilige Aufbereitungsfilter 45 angeordnet sind. Die Öffnungen 69 münden unmittelbar in die Spülbereiche 39. Die Spülung der optischen Grenzflächen 20 erfolgt somit unter Ausnutzung der Strömungsenergie des Messfluids, vorzugsweise ohne aktiven Fluidtransport mittels Pumpen, Gebläse oder dergleichen. Der zwischen den beiden Spülbereichen 39 befindliche Messbereich 70 ist zumindest im Wesentlichen frei durchströmbar. Zu diesem Zweck kann im Gehäuse 38 eine entsprechende Ausnehmung vorgesehen sein.

Bei den dargestellten Ausführungsformen der Erfindung können alternativ oder zusätzlich zu den Aufbereitungsfiltern 45 weitere Mittel zum Aufbereiten des Messfluids vorgesehen sein, beispielsweise Partikelabscheider, Heizvorrichtungen oder Kühlvorrichtungen. Weiterhin kann die Zufuhr des Spülfluids komplexer gestaltet sein, beispielsweise indem eine ringförmige Anordnung aus Auslassöffnungen in der Umgebung einer optischen Grenzfläche 20 vorgesehen ist.

Durch die Verwendung von aufbereitetem Messfluid als Spülfluid erübrigt sich das Erfordernis, eine externe Spülfluidquelle bereitzustellen. Zudem kann die Messung nicht durch einen Überschuss an Spülfluid verfälscht werden. Aufwendige Maßnahmen zur Überwachung der pro Zeit abgegebenen Menge an Spülfluid sind daher nicht erforderlich. Die erfindungsgemäßen Prinzipien sind grundsätzlich nicht nur bei Gasen, sondern auch bei Flüssigkeiten anwendbar.

### Bezugszeichenliste

- 11: Strömungskanal
- 12: Gasstrom
- 13, 13': Analysevorrichtung
- 15: Messeinheit
- 17a: Sendemodul
- 17b: Empfangsmodul
- 19: Messstrecke
- 20: optische Grenzfläche
- 21: Filter
- 25: Totraum
- 27: Spülvorrichtung
- 29: Spülbereich
- 33: Analysevorrichtung
- 37, 37': Spülvorrichtung
- 38: Gehäuse
- 39: Spülbereich
- 40: Einlass
- 41: Zuführleitung
- 42: erster Auslass
- 43: zweiter Auslass
- 45: Aufbereitungsfilter
- 47: Flansch
- 49: Totraum
- 63: Analysevorrichtung
- 67: Spülvorrichtung
- 69: Öffnung
- 70: Messbereich

## Patentansprüche

1. Analysevorrichtung (33, 53, 63) zum Analysieren eines Messfluids, das durch einen Strömungskanal (11) strömt, mit einer optischen Messeinheit (15), die wenigstens eine optische Grenzfläche (20) zur messtechnischen Anbindung der optischen Messeinheit (15) an den Strömungskanal (11) aufweist, und mit einer Spülvorrichtung (37, 37', 67) zum Spülen der wenigstens einen optischen Grenzfläche (20) mit einem Spülfluid, wobei die Spülvorrichtung (37, 37', 67) dazu ausgebildet ist, Messfluid aufzubereiten und das aufbereitete Messfluid als Spülfluid in einen an die optische Grenzfläche (20) angrenzenden Spülbereich (39) einzubringen, und wobei die Spülvorrichtung (37, 37', 67) dazu ausgebildet ist, einen Teilstrom des durch den Strömungskanal (11) strömenden Messfluids aufzufangen, aufzubereiten und unter Ausnutzung der Strömungsenergie in den Spülbereich (39) einzubringen,
**dadurch gekennzeichnet, dass**
die Spülvorrichtung (37, 67) eine den Teilstrom auffangende Öffnung aufweist, die zumindest im Wesentlichen entgegen einer Hauptströmungsrichtung des Strömungskanals (11) ausgerichtet ist.

2. Analysevorrichtung nach Anspruch 1,
**dadurch gekennzeichnet, dass**
die optische Messeinheit (15) einen Messbereich (70) definiert, der zumindest im Wesentlichen frei durchströmbar ist.

3. Analysevorrichtung nach Anspruch 2,
**dadurch gekennzeichnet, dass**
der Spülbereich (39) durch Abschirmungs- und/oder Filtermittel von dem Messbereich (70) getrennt ist.

4. Analysevorrichtung nach zumindest einem der vorstehenden Ansprüche,
**dadurch gekennzeichnet, dass**
die Spülvorrichtung (37, 67) dazu ausgebildet ist, das Messfluid zum Aufbereiten zu filtern.

5. Analysevorrichtung nach zumindest einem der vorstehenden Ansprüche,
**dadurch gekennzeichnet, dass**
die Spülvorrichtung (37, 67) dazu ausgebildet ist, das Messfluid zum Aufbereiten einem Abscheideprozess zu unterziehen.

6. Analysevorrichtung nach zumindest einem der vorstehenden Ansprüche,
**dadurch gekennzeichnet, dass**
die Spülvorrichtung (37, 67) dazu ausgebildet ist, das Messfluid zum Aufbereiten zu heizen oder zu kühlen.

7. Analysevorrichtung nach zumindest einem der vorstehenden Ansprüche,
**dadurch gekennzeichnet, dass**
die Spülvorrichtung (37) dazu ausgebildet ist, Messfluid aus dem Strömungskanal (11) zu entnehmen, das entnommene Messfluid innerhalb oder außerhalb des Strömungskanals (11) aufzubereiten und das aufbereitete Messfluid mittels wenigstens einer Zuführleitung (41) dem Spülbereich (39) zuzuführen.

8. Analysevorrichtung nach Anspruch 7,
**dadurch gekennzeichnet, dass**
die Spülvorrichtung (37) dazu ausgebildet ist, das Messfluid an einer verunreinigungsgeschützten Stelle zu entnehmen und dadurch aufzubereiten.

9. Analysevorrichtung nach zumindest einem der vorstehenden Ansprüche,
**dadurch gekennzeichnet, dass**
die optische Messeinheit (15) zwei optische Grenzflächen (20) umfasst, wobei die Spülvorrichtung (37, 67) dazu ausgebildet ist, das aufbereitete Messfluid als Spülfluid in jeweilige an die optischen Grenzflächen (20) angrenzende Spülbereiche (39) abzugeben.

10. Analysevorrichtung nach Anspruch 9,
**dadurch gekennzeichnet, dass**
die zwei optischen Grenzflächen (20) einander gegenüberliegend angeordnet sind und zwischen den optischen Grenzflächen (20) ein Messbereich (70) der optischen Messeinheit (15) ausgebildet ist.

11. Analysevorrichtung nach zumindest einem der vorstehenden Ansprüche,
**dadurch gekennzeichnet, dass**
die Spülvorrichtung (37) dazu ausgebildet ist, das aufbereitete Messfluid aktiv in den Spülbereich (39) einzubringen, insbesondere einzublasen oder einzuspritzen.

12. Analysevorrichtung nach zumindest einem der vorstehenden Ansprüche,
**dadurch gekennzeichnet, dass**
die Spülvorrichtung (37, 67) dazu ausgebildet ist, Messfluid aktiv aus dem Strömungskanal (11), insbesondere aus einem zumindest im Wesentlichen frei durchströmbaren Messbereich (70), abzusaugen.

13. Verfahren zum Analysieren eines Messfluids, das durch einen Strömungskanal (11) strömt, mittels einer optischen Messeinheit (15), die wenigstens eine optische Grenzfläche (20) zur messtechnischen Anbindung der optischen Messeinheit (15) an den Strömungskanal aufweist, wobei die wenigstens eine optische Grenzfläche (20) mittels einer Spülvorrichtung (37, 67) mit einem Spülfluid gespült wird, wobei
Messfluid aufbereitet wird und das aufbereitete Messfluid als Spülfluid in einen an die optische Grenzfläche (20) angrenzenden Spülbereich (39) eingebracht wird, und wobei
ein erster Teilstrom des durch den Strömungskanal (11) strömenden Messfluids aufgefangen, aufbereitet und in den Spülbereich (39) eingebracht wird und ein von dem Spülbereich (39) getrennter Messbereich (70) der optischen Messeinheit (15) einem separaten zweiten Teilstrom des durch den Strömungskanal (11) strömenden Messfluids ausgesetzt wird,
**dadurch gekennzeichnet, dass**
der erste Teilstrom mit einer Öffnung aufgefangen wird, die zumindest im Wesentlichen entgegen einer Hauptströmungsrichtung des Strömungskanals (11) ausgerichtet ist.

## Claims

1. An analysis apparatus (33, 53, 63) for analyzing a measurement fluid which flows through a flow passage (11), said analysis apparatus (33, 53, 63) comprising an optical measurement unit (15) which has at least one optical boundary surface (20) for a technical measurement connection of the optical measurement unit (15) to the flow passage (11); and a flushing apparatus (37, 37', 67) for flushing the at least one optical boundary surface (20) with a flushing fluid, wherein
the flushing apparatus (37, 37', 67) is configured to process measurement fluid and to introduce the processed measurement fluid as a flushing fluid into a flushing region (39) adjoining the optical boundary surface (20), and wherein
the flushing apparatus (37, 37', 67) is configured to collect a part flow of the measurement fluid flowing through the flow passage (11), to process it and to introduce it into the flushing region (39) by utilizing the flow energy, **characterized in that**
the flushing apparatus (37, 67) has an opening which collects the part flow and which is at least substantially oriented against a main flow direction of the flow passage (11).

2. An analysis apparatus in accordance with claim 1,
**characterized in that**
the optical measurement unit (15) defines a measurement zone (70) which can at least substantially be freely flowed through.

3. An analysis apparatus in accordance with claim 2,
**characterized in that**
the flushing region (39) is separated from the measurement zone (70) by shielding means and/or filter means.

4. An analysis apparatus in accordance with at least one of the preceding claims,
**characterized in that**
the flushing apparatus (37, 67) is configured to filter the measurement fluid for processing.

5. An analysis apparatus in accordance with at least one of the preceding claims,
**characterized in that**
the flushing apparatus (37, 67) is configured to subject the measurement fluid to a separation process for processing.

6. An analysis apparatus in accordance with at least one of the preceding claims,
**characterized in that**
the flushing apparatus (37, 67) is configured to heat or to cool the measurement fluid for processing.

7. An analysis apparatus in accordance with at least one of the preceding claims,
**characterized in that**
the flushing apparatus (37) is configured to remove measurement fluid from the flow passage (11), to process the removed measurement fluid inside or outside the flow passage (11) and to supply the processed measurement fluid to the flushing region (39) by means of at least one supply line (41).

8. An analysis apparatus in accordance with claim 7,
**characterized in that**
the flushing apparatus (37) is configured to remove the measurement fluid at a point protected from contamination and thereby to process it.

9. An analysis apparatus in accordance with at least one of the preceding claims,
**characterized in that**
the optical measurement unit (15) comprises two optical boundary surfaces (20), with the flushing apparatus (37, 67) being configured to output the processed measurement fluid as a flushing fluid into respective flushing regions (39) adjoining the optical boundary surfaces (20).

10. An analysis apparatus in accordance with claim 9,
**characterized in that**
the two optical boundary surfaces (20) are arranged disposed opposite one another and a measurement zone (70) of the optical measurement unit (15) is formed between the optical boundary surfaces (20).

11. An analysis apparatus in accordance with at least one of the preceding claims,
**characterized in that**
the flushing apparatus (37) is configured to actively introduce, in particular blow or inject, the processed measurement fluid into the flushing region (39).

12. An analysis apparatus in accordance with at least one of the preceding claims,
**characterized in that**
the flushing apparatus (37, 67) is configured to actively suck measurement fluid from the flow passage (11), in particular from a measurement zone (70) which can at least substantially be freely flowed through.

13. A method of analyzing a measurement fluid, which flows through a flow passage (11), by means of an optical measurement unit (15) which has at least one optical boundary surface (20) for the technical measurement connection of the optical measurement unit (15) to the flow passage, wherein the at least one optical boundary surface (20) is flushed with a flushing fluid by means of a flushing apparatus (37, 67), wherein measurement fluid is processed and the processed measurement fluid is introduced as a flushing fluid into a flushing region (39) adjoining the optical boundary surface (20), and wherein
a first part flow of the measurement fluid flowing through the flow passage (11) is collected, processed and introduced into the flushing region (39) and a measurement zone (70) of the optical measurement unit (15) which is separate from the flushing region (39) is exposed to a separate second part flow of the measurement fluid flowing through the flow passage (11), **characterized in that**
the first part flow is collected by an opening which is at least substantially oriented against a main flow direction of the flow passage (11).

## Revendications

1. Dispositif d'analyse (33, 53, 63) pour analyser un fluide de mesure s'écoulant à travers un canal d'écoulement (11), comportant une unité de mesure optique (15) qui présente au moins une interface optique (20) pour la liaison métrologique de l'unité de mesure optique (15) avec le canal d'écoulement (11), et comportant un dispositif de rinçage (37, 37', 67) pour rincer ladite au moins une interface optique (20) avec un fluide de rinçage,
dans lequel
le dispositif de rinçage (37, 37', 67) est réalisé pour traiter le fluide de mesure et pour introduire le fluide de mesure traité comme fluide de rinçage dans une zone de rinçage (39) adjacente à l'interface optique (20), et
le dispositif de rinçage (37, 37', 39) est réalisé pour capter un flux partiel du fluide de mesure s'écoulant à travers le canal d'écoulement (11), pour le traiter et pour l'introduire dans la zone de rinçage (39) en exploitant l'énergie d'écoulement,
**caractérisé en ce que**
le dispositif de rinçage (37, 67) présente une ouverture captant le flux partiel, dirigée au moins sensiblement en sens opposé à une direction d'écoulement principale du canal d'écoulement (11).

2. Dispositif d'analyse selon la revendication 1,
**caractérisé en ce que**
l'unité de mesure optique (15) définit une zone de mesure (70) qui peut être traversée au moins sensiblement librement.

3. Dispositif d'analyse selon la revendication 2,
**caractérisé en ce que**
la zone de rinçage (39) est séparée de la zone de mesure (70) par des moyens de blindage et/ou de filtrage.

4. Dispositif d'analyse selon l'une au moins des revendications précédentes,
**caractérisé en ce que**
le dispositif de rinçage (37, 67) est réalisé pour filtrer le fluide de mesure à traiter.

5. Dispositif d'analyse selon l'une au moins des revendications précédentes,
**caractérisé en ce que**
le dispositif de rinçage (37, 67) est réalisé pour soumettre le fluide de mesure à traiter à un processus de séparation.

6. Dispositif d'analyse selon l'une au moins des revendications précédentes,
**caractérisé en ce que**
le dispositif de rinçage (37, 67) est réalisé pour chauffer ou refroidir le fluide de mesure à traiter.

7. Dispositif d'analyse selon l'une au moins des revendications précédentes,
**caractérisé en ce que**
le dispositif de rinçage (37) est réalisé pour prélever du fluide de mesure hors du canal d'écoulement (11), pour traiter le fluide de mesure prélevé à l'intérieur ou à l'extérieur du canal d'écoulement (11) et pour amener le fluide de mesure traité à la zone de rinçage (39) par l'intermédiaire d'au moins une conduite d'alimentation (41).

8. Dispositif d'analyse selon la revendication 7,
**caractérisé en ce que**
le dispositif de rinçage (37) est réalisé pour prélever le fluide de mesure à un emplacement protégé vis-à-vis d'un encrassement, et pour ainsi le traiter.

9. Dispositif d'analyse selon l'une au moins des revendications précédentes,
**caractérisé en ce que**
l'unité de mesure optique (15) comprend deux interfaces optiques (20), le dispositif de rinçage (37, 67) étant réalisé pour distribuer le fluide de mesure traité comme fluide de rinçage dans des zones de rinçage respectives (39) adjacentes aux interfaces optiques (20).

10. Dispositif d'analyse selon la revendication 9,
**caractérisé en ce que**
les deux interfaces optiques (20) sont disposées à l'opposé l'une de l'autre, et une zone de mesure (70) de l'unité de mesure optique (15) est réalisée entre les interfaces optiques (20).

11. Dispositif d'analyse selon l'une au moins des revendications précédentes,
**caractérisé en ce que**
le dispositif de rinçage (37) est réalisé pour introduire par voie active, en particulier pour souffler ou injecter, le fluide de mesure traité dans la zone de rinçage (39).

12. Dispositif d'analyse selon l'une au moins des revendications précédentes,
**caractérisé en ce que**
le dispositif de rinçage (37, 67) est réalisé pour aspirer par voie active le fluide de mesure hors du canal d'écoulement (11), en particulier hors d'une zone de mesure (70) qui peut être traversée au moins sensiblement librement.

13. Procédé pour analyser un fluide de mesure s'écoulant à travers un canal d'écoulement (11) au moyen d'une unité de mesure optique (15) qui présente au moins une interface optique (20) pour la liaison métrologique de l'unité de mesure optique (15) avec le canal d'écoulement, ladite au moins une interface optique (20) étant rincée avec un fluide de rinçage au moyen d'un dispositif de rinçage (37, 67),
dans lequel
le fluide de mesure est traité et le fluide de mesure traité est introduit comme fluide de rinçage dans une zone de rinçage (39) adjacente à l'interface optique (20), et
un premier flux partiel du fluide de mesure s'écoulant à travers le canal d'écoulement (11) est capté, traité et introduit dans la zone de rinçage (39), et une zone de mesure (70) de l'unité de mesure optique (15) séparée de la zone de rinçage (39) est soumise à un second flux partiel distinct du fluide de mesure s'écoulant à travers le canal d'écoulement (11),
**caractérisé en ce que**
le premier flux partiel est capté par une ouverture qui est dirigée au moins sensiblement en sens opposé à une direction d'écoulement principale du canal d'écoulement (11).
